# EUROPÄISCHE PATENTANMELDUNG

(11) **EP 3 967 579 A1**
(43) Veröffentlichungstag der Anmeldung: **16.03.2022**
(21) Anmeldenummer: 20195901.2
(22) Anmeldetag: 14.09.2020
(51) Int. Cl.: B62D 25/00, B62D 29/00

(54) **DÄMMELEMENT**

(71) Anmelder: SIKA TECHNOLOGY AG, 6340 Baar (CH)
(72) Erfinder: Lindgren, Henrik, 7181 Feluy (BE); Marcq, Dimitri, 1480 Tubize (BE)
(74) Vertreter: Sika Patent Attorneys

(57) **Zusammenfassung**

Ein Dämmelement zur Abdämmung eines Strukturelementes in einem Kraftfahrzeug umfasst einen Träger und ein auf dem Träger angeordnetes expandierbares Material. Der Träger hat zumindest eine Haube und ist derart ausgebildet, dass bei einer Stapelung mehrerer identischer Dämmelemente jeweils Hauben benachbarter Dämmelemente ineinandergreifen.

## Beschreibung

Die Erfindung betrifft ein Dämmelement zur Abdämmung eines Strukturelementes in einem Kraftfahrzeug. Weiterhin betrifft die Erfindung ein System mit mehreren solchen Dämmelementen, sowie ein Verfahren zur Anbringung solcher Dämmelemente an Strukturelementen.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das geringe Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmässige Form oder ein enges Ausmass auf, wodurch es erschwert wird, sie richtig abzudichten, zu verstärken und zu dämpfen.

Insbesondere im Automobilbau, aber auch im Flugzeug- und Bootsbau, werden deshalb Abdichtungselemente (Englisch: baffle) verwendet, um Hohlräume abzudichten und/ oder akustisch abzuschotten, oder Verstärkungselemente (Englisch: reinforcer) verwendet, um Hohlräume zu verstärken.

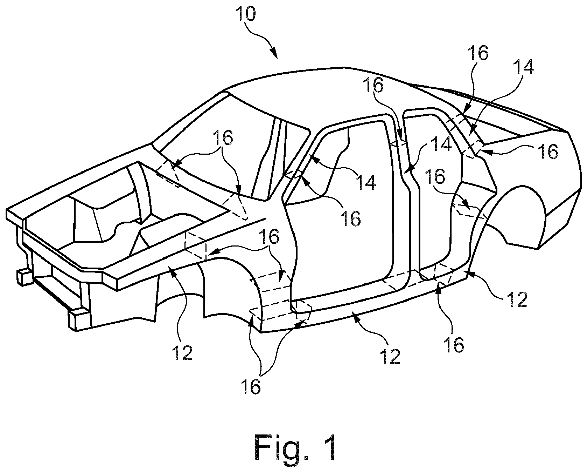

In Fig. 1 ist eine Karosserie eines Automobils schematisch dargestellt. Die Karosserie 10 weist dabei verschiedene Strukturen mit Hohlräumen, wie beispielsweise Säulen 14 und Träger bzw. Verstrebungen 12 auf. Solche Strukturelemente 12, 14 mit Hohlräumen werden üblicherweise mit Dämmelementen 16 abgedichtet bzw. verstärkt.

Nachteilig an den bisher bekannten Abdichtungs- und/oder Verstärkungselementen ist es, dass solche Teile oftmals nicht effizient verpackt werden können. Weiterhin kommt es bei einem Transport solcher Teile immer wieder zu Verwechslungen und Beschädigungen von einzelnen Teilen.

Es ist daher eine Aufgabe der vorliegenden Erfindung, ein verbessertes Dämmelement zur Abdämmung eines Strukturelementes in einem Kraftfahrzeug zur Verfügung zu stellen, welches die Nachteile des Standes der Technik vermeidet. Das Dämmelement soll insbesondere wirtschaftlicher verpackt und transportiert werden können.

Diese Aufgabe wird gelöst durch ein Dämmelement zur Abdämmung eines Strukturelementes in einem Kraftfahrzeug, das Dämmelement umfassend: einen Träger; und ein expandierbares Material, welches auf dem Träger angeordnet ist; wobei der Träger zumindest eine Haube hat und derart ausgebildet ist, dass bei einer Stapelung mehrerer identischer Dämmelemente jeweils Hauben benachbarter Dämmelemente ineinandergreifen.

Diese Lösung hat zunächst den Vorteil, dass dadurch ein Dämmelement zur Verfügung gestellt wird, welches stapelbar ausgebildet ist. Dadurch können solche Dämmelemente für den Transport aufeinandergestapelt werden und im gestapelten Zustand verpackt und transportiert werden. Dies bringt einerseits Ersparnisse bei den Transportkosten, weil dadurch die Dämmelemente platzsparender verpackt werden können, so dass in einem bestimmten Volumen mehr Dämmelemente transportiert werden können, als dies mit herkömmlichen Dämmelementen der Fall war. Zudem bietet eine Stapelung solcher Dämmelemente den Vorteil, dass Verwechslungen von unterschiedlichen Dämmelementen einfacher erkannt werden können. Wenn beispielsweise ein erstes Dämmelement in einem Behälter mit mehreren zweiten Dämmelementen verpackt wird, fällt dies sofort auf, weil das erste Dämmelement in aller Regel nicht mit den zweiten Dämmelementen stapelbar ist. Dadurch können Verwechslungen stark reduziert werden.

Das hier vorgeschlagene stapelbare Dämmelement bietet weiterhin den Vorteil, dass durch die gestapelte Anordnung für Transport und Lagerung die einzelnen Dämmelemente weniger leicht beschädigt werden können. Werden nämlich wie bisher die einzelnen Dämmelemente lose in einem Behälter transportiert, so kommt es zu vielen Kontakten zwischen den Dämmelementen, wobei ab und zu eine Beschädigung auftreten kann. Werden jedoch die Dämmelemente in Stapeln transportiert, so wird eine Anzahl an mechanischen Berührungen der Dämmelemente untereinander stark reduziert. Zudem können die Dämmelemente derart ausgestaltet werden, dass die vorgesehenen Berührungsorte robust bzw. wenig anfällig auf Beschädigung ausgebildet sind, und/oder dass leichter zu beschädigende Orte der Dämmelemente an geschützten Stellen angeordnet sind, welche beispielsweise bei einer Stapelung durch die benachbarten Dämmelemente abgedeckt sind.

Weiterhin bietet das hier vorgeschlagene stapelbare Dämmelement den Vorteil, dass eine automatisierte Anbringung der Dämmelemente an Strukturelementen in Kraftfahrzeugen erleichtert wird. So können beispielsweise ganze Stapel von solchen Dämmelementen in einen Roboter geladen werden, welcher dann die einzelnen Dämmelemente von diesem Stapel entnimmt und entsprechend an die Strukturelemente anbringt. Bei lose angeordneten Dämmelementen in einem Behälter ist eine solche automatisierte Anbringung der Dämmelemente wesentlich schwieriger zu bewerkstelligen.

Das vorsehen von einer oder mehreren Hauben bietet den Vorteil, dass dadurch einerseits eine Stapelbarkeit der Dämmelemente verbessert wird, indem Hauben benachbarter Dämmelemente bei der Stapelung ineinandergreifen. Dadurch werden die gestapelten Dämmelemente gegen seitliches Verschieben mechanisch gesichert, und zudem wird eine Stapelhöhe möglichst klein gehalten, indem die Dämmelemente platzsparend ineinandergreifen.

Diese Hauben haben zudem den Vorteil, dass dadurch eine Manipulation durch einen Applikationsroboter vereinfacht und effizienter wird. Beispielsweise kann ein Greifer eines Roboters die Dämmelemente direkt an einer Haube greifen und manipulieren. Bei Dämmelementen mit mehreren Hauben können entsprechend mehrere Greifer eingesetzt werden.

Die Bezeichnung "Dämmelement" umfasst im Zusammenhang mit dieser Erfindung Elemente zur Abschottung und/oder Abdämmung und/oder Verschliessung und/oder Verstärkung und/oder Dämmung eines Strukturelementes. Diese verschiedenen Eigenschaften eines solchen Dämmelementes können dabei einzeln oder aber in Kombination miteinander auftreten.

Die Bezeichnung "Haube" umfasst im Zusammenhang mit dieser Erfindung insbesondere Ausformungen bzw. Wölbungen am Träger des Dämmelementes mit einem hohlen Inneren und einer offenen Seite. Dabei kann eine solche Haube beispielsweise eine halbkugelähnliche, kuppelähnliche, würfelähnliche, zylinderähnliche, kegelähnliche, oder eine unregelmässige Formgebung aufweisen.

Die Bezeichnung "Oberseite" und "Unterseite" bedeutet im Zusammenhang mit dieser Erfindung jeweils die beiden Hauptoberflächen bzw. die beiden grössten Seitenflächen des Dämmelementes. Da die Dämmelemente dazu ausgelegt sind, einen Querschnitt in einem Strukturelement zu verschliessen, bedeutet dies, dass die Oberseite und die Unterseite sich jeweils im Wesentlichen in einer Ebene eines abzudämmenden Querschnitts befinden in einem Anwendungszustand. Dabei können die Oberseite bzw. die Unterseite auch einen stufenförmigen Charakter haben, das heisst, die Oberseite bzw. die Unterseite muss nicht vollständig flach ausgebildet sein.

Die Bezeichnung "parallel" in Bezug zur Anordnung von Dämmelementen in einem Stapel mehrerer identischer Dämmelemente bedeutet im Zusammenhang dieser Erfindung, dass jeweils dieselben Flächen und/oder Kanten der identischen Dämmelemente im Wesentlichen parallel zueinander angeordnet sind.

In einer beispielhaften Ausführungsform hat das Dämmelement auf der Oberseite und auf der Unterseite jeweils genau drei Kontaktstellen, welche bei einer Stapelung von benachbarten Dämmelementen aufeinander aufliegen.

In einer alternativen Weiterbildung hat das Dämmelement auf der Oberseite und auf der Unterseite genau vier oder zumindest vier solche Kontaktstellen.

In einer weiteren alternativen Ausführungsform hat das Dämmelement auf der Oberseite und auf der Unterseite genau fünf oder zumindest fünf solche Kontaktstellen.

In einer beispielhaften Ausführungsform sind zumindest eine Kontaktstelle auf der Oberseite und eine dieser zugeordneten Kontaktstelle auf der Unterseite derart ausgebildet, dass benachbarte Dämmelemente bei einer Stapelung in vertikaler Richtung gegen eine horizontale Verschiebung gesichert sind.

In einer beispielhaften Weiterbildung sind zumindest eine Kontaktstelle auf der Oberseite und eine dieser zugeordneten Kontaktstelle auf der Unterseite derart ausgebildet, dass bei einer Stapelung eine mechanische Arretierung zwischen den entsprechenden Kontaktstellen entsteht.

In einer beispielhaften Ausführungsform bildet die Haube zumindest eine dieser Kontaktstellen.

In einer beispielhaften Ausführungsform liegt zumindest eine Kontaktstelle in einem Bereich eines Fixierungselementes.

Als "Bereich eines Fixierungselementes" wird im Zusammenhang dieser Erfindung das Fixierungselement selbst, eine Basis des Fixierungselementes, und das expandierbare Material an der Basis des Fixierungselementes verstanden, welches benötigt wird, um die Öffnung im Strukturelement, in welcher das Fixierungselement eingeführt wird, abzudämmen.

In einer beispielhaften Ausführungsform ist das Fixierungselement als Clip ausgebildet.

In einer beispielhaften Ausführungsform beträgt eine Höhe des Fixierungselementes in einer Stapelrichtung weniger als 8 mm, bevorzugt weniger als 7 mm, besonders bevorzugt weniger als 6 mm.

In einer beispielhaften Ausführungsform beträgt eine Höhe an der Basis des Fixierungselementes in Stapelrichtung, welche sowohl eine Basis des Fixierungselementes umfasst als auch das expandierbare Material an der Basis des Fixierungselementes, welches benötigt wird, um die Öffnung im Strukturelement, in welcher das Fixierungselement eingeführt wird, abzudämmen, höchstens 130% oder höchstens 120% oder höchstens 110% einer Höhe des Fixierungselementes in Stapelrichtung.

Die Ausgestaltung solcher relativer Höhen hat den Vorteil, dass dadurch die Dämmelemente platzsparender verpackt werden können.

In einer beispielhaften Ausführungsform ist zumindest eine Kontaktstelle als Distanzelement ausgebildet, wobei das Distanzelement in einem Verwendungszustand des Dämmelementes im Strukturelement zur Abstützung und/oder Positionierung des Dämmelementes am Strukturelement dient.

In einer beispielhaften Weiterbildung ist das Distanzelement an sich stapelbar ausgestaltet, wobei zwei ineinander gestapelte Distanzelemente eine Gesamthöhe in Stapelrichtung von höchstens 170% oder höchstens 160% oder höchstens 150% oder höchstens 140% oder höchstens 130% einer Höhe eines einzelnen Distanzelementes aufweisen.

In einer beispielhaften Ausführungsform bilden Stufen des Trägers einen Winkel zur Stapelrichtung von zumindest 35° oder zumindest 40° oder zumindest 45° oder zumindest 50° oder zumindest 55°.

Der Vorteil von derart gestalteten Stufen liegt darin, dass Dämmelemente mit flacheren Stufen besser gestapelt werden können, als dies mit steileren Stufen der Fall wäre. Bei steileren Stufen besteht insbesondere das Problem, dass benachbarte Dämmelemente nicht ohne horizontalen Versatz vertikal übereinander angeordnet werden können.

In einer beispielhaften Ausführungsform ist eine Stufe des Trägers und zumindest eine Haube derart ausgebildet, dass die Haube zusammen mit der Stufe eine Auflagefläche bilden, welche parallel zu einer Ebene der Oberseite bzw. Unterseite des Trägers ist.

In einer beispielhaften Weiterbildung umfasst das Dämmelement eine Stufe und zwei Hauben, welche zusammen eine solche Auflagefläche bilden.

Dadurch können solche Dämmelemente direkt auf eine ebene Fläche gestellt und aufeinandergestapelt werden, wobei eine Stapelrichtung senkrecht zu dieser ebenen Fläche ausgerichtet ist.

In einer alternativen Ausführungsform hat das Dämmelement drei Hauben, welche zusammen eine Auflagefläche bilden, welche parallel zu einer Ebene der Oberseite bzw. Unterseite des Trägers ist.

Dadurch können wiederum Dämmelemente direkt auf ebenen Flächen gestapelt werden.

In einer weiteren alternativen Ausführungsform hat das Dämmelement zwei Hauben, welche zusammen eine Auflagefläche bilden, welche parallel zu einer Ebene der Oberseite bzw. Unterseite des Trägers ist.

In einer weiteren alternativen Ausführungsform hat das Dämmelement eine Haube, wobei das Haubendach eine Auflagefläche bildet, welche parallel zu einer Ebene der Oberseite bzw. Unterseite des Trägers ist.

In einer beispielhaften Ausführungsform sind alle oder einzelne Kontaktstellen durch den Träger ausgebildet.

In einer beispielhaften Ausführungsform sind einzelne Kontaktstellen durch das expandierbare Material ausgebildet.

In einer weiteren Ausführungsform ist zumindest eine Kontaktstelle durch den Träger gebildet, und zumindest eine Kontaktstelle ist durch das expandierbare Material gebildet.

Da der Träger in der Regel mit kleineren Toleranzen hergestellt werden kann als das expandierbare Material, kann es vorteilhaft sein, die Kontaktstellen möglichst durch den Träger auszubilden.

In einer beispielhaften Ausführungsform hat das Dämmelement zumindest ein Sicherungselement, welches derart ausgebildet ist, dass bei aufeinander gestapelten Dämmelementen ein Dämmelement durch das Sicherungselement eines benachbarten Dämmelementes gegen eine Verschiebung quer zur Stapelrichtung und/oder gegen eine Rotation des Dämmelementes um die Stapelrichtung gesichert ist.

In einer beispielhaften Ausführungsform ist das Sicherungselement derart ausgebildet, dass sich bei aufeinander gestapelten Dämmelementen die Sicherheitselemente zweier benachbarter Dämmelemente in Stapelrichtung überlappen.

In einer beispielhaften Weiterbildung überlappen sich die Sicherheitselemente in Stapelrichtung um zumindest 3 mm oder um zumindest 5 mm oder um zumindest 7 mm.

In einer beispielhaften Ausführungsform hat das Sicherheitselement zumindest eine Führungsfläche, welche derart ausgebildet ist, dass bei einer Stapelung die Führungsfläche ein zu stapelndes Dämmelement führt, sodass das neu gestapelte Dämmelement im Wesentlichen deckungsgleich in Stapelrichtung auf dem Dämmelement angeordnet wird.

In einer beispielhaften Ausführungsform ist zumindest ein Distanzelement als Sicherungselement ausgestaltet.

In einer beispielhaften Weiterbildung ist das Distanzelement im Wesentlichen Y-förmig ausgestaltet. Beispielsweise können dabei einzelne Flächen der Schenkel des Y-förmigen Distanzelementes als Führungsfläche ausgebildet sein.

In einer alternativen Weiterbildung ist das Distanzelement im Wesentlichen U-förmig oder V-förmig. Wiederum können dabei einzelne Flächen der Schenkel des U-förmigen oder V-förmigen Distanzelementes als Führungsfläche ausgebildet sein.

In einer beispielhaften Ausführungsform ist zumindest eine Stufe als Sicherungselement ausgestaltet.

In einer beispielhaften Ausführungsform ist zumindest ein Bereich eines Fixierungselementes als Sicherungselement ausgestaltet.

In einer beispielhaften Weiterbildung ist eine Basis des Fixierungselementes als Sicherungselement ausgestaltet. Dabei kann diese Basis beispielsweise im Wesentlichen U-förmig ausgebildet sein. Wiederum können dabei einzelne Flächen der Schenkel der U-förmigen Basis des Fixierungselementes als Führungsfläche ausgebildet sein.

In einer beispielhaften Ausführungsform ist zumindest eine Haube als Sicherungselement ausgebildet.

In einer beispielhaften Ausführungsform sind alle oder einzelne Sicherungselemente durch den Träger ausgebildet.

In einer alternativen Ausführungsform sind einzelne Sicherungselemente durch das expandierbare Material ausgebildet.

In einer weiteren Ausführungsform ist zumindest ein Sicherungselement durch den Träger gebildet, und zumindest ein Sicherungselement ist durch das expandierbare Material gebildet.

Da der Träger in der Regel mit kleineren Toleranzen hergestellt werden kann als das expandierbare Material, kann es vorteilhaft sein, die Sicherungselemente möglichst durch den Träger auszubilden.

In einer beispielhaften Ausführungsform hat das Dämmelement eine Oberseite und eine Unterseite, welche in einem Verwendungszustand im Wesentlichen in einer Ebene eines abzudämmenden Querschnittes des Strukturelementes ausgerichtet sind.

In einer beispielhaften Ausführungsform ist eine offene Seite der Haube und/oder ein Dach der Haube im Wesentlichen parallel zur Oberseite bzw. Unterseite des Dämmelementes ausgerichtet ist.

In einer beispielhaften Ausführungsform überragt eine Seitenwand der Haube nur die Unterseite in einer Stapelrichtung.

In einer alternativen Ausführungsform überragt eine Seitenwand der Haube nur die Oberseite in einer Stapelrichtung.

In einer weiteren alternativen Ausführungsform überragt eine Seitenwand der Haube sowohl die Unterseite als auch die Oberseite in einer Stapelrichtung.

In einer beispielhaften Ausführungsform ist ein Querschnitt der Haube im Wesentlichen trapezförmig.

In einer alternativen Ausführungsform ist ein Querschnitt der Haube im Wesentlichen bogenförmig, kuppelförmig, halbkreisförmig, rechteckig, dreieckig, oder unregelmässig geformt.

In einer beispielhaften Ausführungsform hat die Haube eine im Wesentlichen kreisförmige, elliptische, oder ovale Grundfläche.

In einer beispielhaften Ausführungsform hat der Träger zumindest zwei Hauben oder zumindest drei Hauben.

In einer beispielhaften Weiterbildung haben zwei Hauben einen unterschiedlichen Grundriss.

In einer beispielhaften Ausführungsform ist die Haube derart ausgebildet, dass bei einer Stapelung mehrerer identischer Dämmelemente jeweils Hauben benachbarter Dämmelemente aufeinander aufliegen.

In einer beispielhaften Ausführungsform hat die Haube zumindest einen Stopper, welcher einen Auflageort bei einer Stapelung definiert.

In einer beispielhaften Weiterbildung ist der Stopper an der Seitenwand der Haube angeordnet. Dabei kann der Stopper an einer Innenseite der Seitenwand oder aber an einer Aussenseite der Seitenwand angeordnet sein.

In einer beispielhaften Ausführungsform beträgt eine maximale Haubenhöhe in Stapelrichtung zwischen 5 mm und 40 mm, bevorzugt zwischen 7 mm und 35 mm, bevorzugt zwischen 7 mm und 30 mm, bevorzug zwischen 10 mm und 30 mm.

In einer alternative Ausführungsform, insbesondere im Zusammenhang mit der Verwendung von Stufen im Träger, können höhere Hauben eingesetzt werden, wobei eine maximale Haubenhöhe in Stapelrichtung zwischen 10 mm und 80 mm, bevorzugt zwischen 20 und 70 mm beträgt.

In einer beispielhaften Ausführungsform beträgt eine maximale Haubenbreite an der offenen Seite der Haube und senkrecht zur Stapelrichtung gemessen zwischen 5 mm und 40 mm, bevorzugt zwischen 5 mm und 30 mm, bevorzugt zwischen 5 mm und 25 mm, bevorzug zwischen 5 mm und 20 mm.

In einer beispielhaften Ausführungsform beträgt eine maximale Haubenbreite am Haubendach und senkrecht zur Stapelrichtung gemessen zwischen 3 mm und 35 mm, bevorzugt zwischen 3 mm und 25 mm, bevorzugt zwischen 3 mm und 20 mm, bevorzug zwischen 3 mm und 15 mm.

In einer beispielhaften Ausführungsform beträgt die maximale Haubenbreite am Haubendach und senkrecht zur Stapelrichtung gemessen höchstens 95%, bevorzugt höchstens 90%, bevorzugt höchstens 85%, bevorzugt höchstens 80%, bevorzugt höchstens 75%, bevorzugt höchsten 70%, bevorzugt höchstens 65%, bevorzugt höchstens 60%, bevorzugt höchstens 55%, bevorzugt höchstens 50% der maximalen Haubenbreite an der offenen Seite der Hauben, senkrecht zur Stapelrichtung gemessen.

In einer beispielhaften Ausführungsform beträgt die Stapelhöhe eines Dämmelementes höchstens 80%, bevorzugt höchstens 70%, bevorzugt höchstens 60%, bevorzugt höchstens 50% der Haubenhöhe.

Als expandierbares Material können grundsätzlich verschiedene Materialien eingesetzt werden, welche zur Schäumung gebracht werden können. Das Material kann dabei Verstärkungseigenschaften aufweisen oder auch nicht. Typischerweise wird das expandierbare Material thermisch, durch Feuchtigkeit oder durch elektromagnetische Strahlung zur Expansion gebracht.

Ein solches expandierbares Material weist typischerweise ein chemisches oder ein physikalisches Treibmittel auf. Chemische Treibmittel sind organische oder anorganische Verbindungen, welche sich unter Einfluss von Temperatur, Feuchtigkeit, oder elektromagnetischer Strahlung zersetzen, wobei mindestens eines der Zersetzungsprodukte ein Gas ist. Als physikalische Treibmittel können beispielsweise Verbindungen eingesetzt werden, welche bei Erhöhung der Temperatur in den gasförmigen Aggregatszustand übergehen. Dadurch sind sowohl chemische als auch physikalische Treibmittel in der Lage, Schaumstrukturen in Polymeren zu erzeugen.

Bevorzugt wird das expandierbare Material thermisch geschäumt wobei chemische Treibmittel eingesetzt werden. Als chemische Treibmittel eignen sich beispielsweise Azodicarbonamide, Sulfohydrazide, Hydrogencarbonate oder Carbonate.
Geeignete Treibmittel sind beispielsweise auch kommerziell erhältlich unter dem Handelsnamen Expancel^{®} von der Firma Akzo Nobel, Niederlande, oder unter dem Handelsnamen Celogen^{®} von der Firma Chemtura Corp., USA.
Die für die Schäumung erforderliche Wärme kann durch externe oder durch interne Wärmequellen, wie einer exothermen chemischen Reaktion, eingebracht werden. Das schäumbare Material ist vorzugsweise bei einer Temperatur von ≤ 250°C, insbesondere von 100°C bis 250°C, bevorzugt von 120°C bis 240°C, bevorzugt von 130°C bis 230°C schäumbar.

Als expandierbare Materialien geeignet sind beispielsweise einkomponentige bei Raumtemperatur nicht fliessende Epoxidharzsysteme, welche insbesondere eine erhöhte Schlagzähigkeit aufweisen und Thixotropiermittel wie Aerosile oder Nanoclays enthalten. Beispielsweise weisen derartige Epoxidharzsysteme 20 bis 50 Gew.-% eines Epoxid-Füssigharzes, 0 bis 30 Gew.-% eines Epoxid-Festharzes, 5 bis 30 Gew.-% Zähigkeitsmodifikatoren, 1 bis 5 Gew.-% physikalische oder chemische Triebmittel, 10 bis 40 Gew.-% Füllstoffe, 1 bis 10 Gew.-% Thixotropiermittel und 2 bis 10 Gew.-% hitzeaktivierbare Härter auf. Als Zähigkeitsmodifikatoren eignen sich reaktive Flüssigkautschuke auf Basis von Nitrilkautschuk oder Derivate von Polyetherpolyol-Polyurethanen, Core-Shell Polymere und ähnliche dem Fachmann bekannte Systeme.

Ebenfalls geeignete expandierbare Materialien sind Treibmittel enthaltende einkomponentige Polyurethanzusammensetzungen, aufgebaut aus kristallinen, OH-Gruppen aufweisenden Polyestern im Gemisch mit weiteren Polyolen, vorzugsweise Polyetherpolyolen, und Polyisocyanaten mit blockierten Isocyanatgruppen. Der Schmelzpunkt des kristallinen Polyesters sollte ≥ 50 °C sein. Die Isocyanatgruppen des Polyisocyanats können beispielsweise mit Nucleophilen wie Caprolactam, Phenolen oder Benzoxalonen blockiert sein. Weiterhin eignen sich blockierte Polysocyanate wie sie beispielsweise in der Pulverlacktechnologie zum Einsatz kommen und beispielsweise unter den Handelsnamen Vestagon^{®} BF 1350 und Vestagon^{®} BF 1540 kommerziell erhältlich sind von Degussa GmbH, Deutschland. Als Isocyanate sind ebenfalls so genannte verkapselte oder oberflächendeaktivierte Polyisocyanate, welche dem Fachmann bekannt und beispielsweise beschrieben sind in EP 0 204 970. Weiterhin eignen sich als expandierbare Materialien Treibmittel enthaltende zweikomponentige Epoxid/Polyurethan-Zusammensetzungen, wie sie beispielsweise beschrieben sind in WO 2005/080524 A1.

Weiterhin eignen sich als expandierbare Materialien Treibmittel enthaltende Ethylen-Vinyl-Acetat-Zusammensetzungen.

Ebenfalls geeignete expandierbare Materialien werden beispielsweise unter dem Handelsnamen SikaBaffle^{®} 240, SikaBaffle^{®} 250 oder SikaBaffle^{®} 255 von der Sika Corp., USA, vertrieben und sind in den Patenten US 5,266,133 und US 5,373,027 beschrieben. Solche expandierbaren Materialien sind für die vorliegende Erfindung besonders bevorzugt.

Als expandierbare Materialien mit Verstärkungseigenschaften sind beispielsweise diejenigen bevorzugt, welche unter dem Handelsnamen SikaReinforcer^{®} 941 von der Sika Corp., USA, vertrieben werden. Diese sind beschrieben in US 6,387,470.

In einer beispielhaften Ausführungsform hat das expandierbare Material eine Expansionsrate von 800% bis 5000%, bevorzugt von 1000% bis 4000%, besonders bevorzugt von 1500% bis 3000%. Expandierbare Materialien mit solchen Expansionsraten bieten den Vorteil, dass dadurch eine zuverlässige Abdichtung bzw. Abdämmung des Strukturelementes gegen Flüssigkeiten und Schall erreicht werden kann.

In einer beispielhaften Ausführungsform ist das expandierbare Material als temperaturinduziertes Material ausgebildet.

Dies hat den Vorteil, dass dadurch der Ofen zur Einbrennung der Tauchlackierungsflüssigkeit benutzt werden kann, um das expandierbare Material zu expandieren und um dadurch den Hohlraum abzudämmen. Somit ist kein zusätzlicher Arbeitsschritt notwendig.

Der Träger kann aus beliebigen Materialien bestehen. Bevorzugte Materialien sind Kunststoffe, insbesondere Polyurethane, Polyamide, Polyester und Polyolefine, bevorzugt hochtemperaturbeständige Polymere wie Poly(phenylenether), Polysulfone oder Polyethersulfone, welche insbesondere auch geschäumt sind; Metalle, insbesondere Aluminium und Stahl; oder gewachsene organische Materialien, insbesondere Holz- oder andere (gepresste) Faserwerkstoffe oder glasartige oder keramische Materialien; speziell auch geschäumte Materialien dieser Art; oder beliebige Kombinationen dieser Materialien. Besonders bevorzugt wird Polyamid, insbesondere Polyamid 6, Polyamid 6,6, Polyamid 11, Polyamid 12 oder ein Gemisch davon verwendet.

Weiterhin kann der Träger beispielsweise massiv, hohl, oder geschäumt sein oder eine gitterartige Struktur aufweisen. Die Oberfläche des Trägers kann typischerweise glatt, rau oder strukturiert sein.

Bei Dämmelementen, bei welchen sich das expandierbare Material auf einem Träger befindet, unterscheidet sich das Herstellungsverfahren dementsprechend, ob der Träger aus einem durch Spritzguss verarbeitbaren Material besteht oder nicht. Ist dies der Fall, wird üblicherweise ein Zweikomponenten-Spritzgussverfahren eingesetzt. Dabei wird zuerst eine erste Komponente, in diesem Fall der Träger, gespritzt. Nach Erstarren dieser ersten Komponente wird die Kavität im Werkzeug vergrössert, bzw. angepasst, oder der hergestellte Spritzling wird in ein neues Werkzeug gelegt, und eine zweite Komponente, in diesem Fall das expandierbare Material, wird mit einem zweiten Spritzaggregat an die erste Komponente angespritzt.

Besteht der Träger aus einem Material, welches sich nicht durch das Spritzgussverfahren herstellen lässt, also beispielsweise aus einem Metall, wird der Träger in ein entsprechendes Werkzeug gelegt und das expandierbare Material wird an den Träger angespritzt. Selbstverständlich besteht auch die Möglichkeit das expandierbare Material durch spezielle Befestigungsmittel oder -verfahren an dem Träger zu befestigen.

Weiterhin können Träger auch durch andere Verfahren hergestellt werden, beispielsweise durch Extrusion.

Das Dämmelement hat eine Stapelhöhe, welche einer zusätzlichen Höhe in Stapelrichtung eines Stapels mit Dämmelementen entspricht, um welche der Stapel wächst, wenn ein weiteres Dämmelement auf den Stapel gestapelt wird.

In einer beispielhaften Ausführungsform beträgt eine Stapelhöhe des Dämmelementes höchstens 80%, bevorzugt höchstens 70%, bevorzugt höchstens 60%, bevorzugt höchstens 50%, bevorzugt höchstens 40%, bevorzugt höchstens 30%, einer Gesamthöhe eines einzelnen Dämmelementes in Stapelrichtung.

Dies hat den Vorteil, dass dadurch die Dämmelemente platzsparender in einem Stapel angeordnet werden können. Durch eine stärkere vertikale Verschachtelung benachbarter Dämmelemente in einem Stapel wird zudem eine verbesserte Stabilität eines Gesamtstapels erreicht.

Die eingangs gestellte Aufgabe wird zudem gelöst durch ein System mit mehreren solchen Dämmelementen, wobei die Dämmelemente aufeinandergestapelt sind.

In einer beispielhaften Ausführungsform umfasst das System zumindest 10 oder zumindest 15 oder zumindest 20 oder zumindest 25 oder zumindest 30 gestapelte Dämmelemente.

In einer weiteren beispielhaften Ausführungsform umfasst das System höchstens 150 oder höchstens 120 oder höchstens 100 oder höchstens 80 oder höchstens 60 gestapelte Dämmelemente.

In einer beispielhaften Ausführungsform liegt ein unterstes Dämmelement des Stapels auf einem Grundelement auf.

Das Vorsehen eines solchen Grundelementes hat den Vorteil, dass dadurch ein Stapel von Dämmelementen auf eine Fläche gestellt werden kann. Zudem können solche Grundelemente für einen automatisierten Prozess verwendet werden.

In einer beispielhaften Ausführungsform erhöht jeweils ein zusätzliches Dämmelement den Stapel um höchstens 20 mm, besonders bevorzugt um höchstens 18 mm, besonders bevorzugt um höchstens 16 mm, besonders bevorzugt um höchstens 14 mm, besonders bevorzugt um höchstens 12 mm, besonders bevorzugt um höchstens 10 mm.

Das enge Stapeln von Dämmelementen hat den Vorteil, dass dadurch die Dämmelemente effizienter verpackt werden können.

In einer beispielhaften Ausführungsform beträgt eine Stapelhöhe eines einzelnen Dämmelementes höchstens 80%, bevorzugt höchstens 70%, bevorzugt höchstens 60%, bevorzugt höchstens 50%, bevorzugt höchstens 40%, bevorzugt höchstens 30%, einer Gesamthöhe eines einzelnen Dämmelementes in Stapelrichtung.

Das enge Stapeln von Dämmelementen hat wiederum den Vorteil, dass dadurch die Dämmelemente effizienter verpackt werden können.

In einer beispielhaften Ausführungsform beträgt die Stapelhöhe eines Dämmelementes höchstens 80%, bevorzugt höchstens 70%, bevorzugt höchstens 60%, bevorzugt höchstens 50% der Haubenhöhe.

Die eingangs gestellte Aufgabe wird zudem gelöst durch ein Verfahren zur Anbringung von Dämmelementen an Strukturelementen in Kraftfahrzeugen, das Verfahren umfassend die Schritte: Bereitstellen eines Systems mit gestapelten Dämmelementen gemäss obiger Beschreibung; und Manipulieren der Dämmelemente mit einem Applikationsroboter, wobei zumindest eine Haube als Positionierungshilfe für den Applikationsroboter dient.

In einer beispielhaften Ausführungsform wird der Applikationsroboter mit mehreren Systemen gleichzeitig beladen.

In einer beispielhaften Ausführungsform wird das Entnehmen der einzelnen Dämmelemente durch den Roboterarm durchgeführt.

In einer beispielhaften Ausführungsform greift ein Greifer des Applikationsroboters die Dämmelemente an der Haube beim Manipulieren.

In einer beispielhaften Ausführungsform haben die Dämmelemente zumindest zwei Hauben, und wobei beide Hauben bei einer Manipulation als Positionierungshilfen dienen.

Einzelheiten und Vorteile der Erfindung werden im Folgenden anhand von Ausführungsbeispielen und mit Bezug auf schematische Zeichnungen beschrieben. Es zeigen:
- Fig. 1: eine beispielhafte Darstellung einer Karosserie;
- Fig. 2a und 2b: schematische Darstellungen eines beispielhaften Dämmelementes;
- Fig. 3a und 3b: schematische Darstellungen beispielhafter Hauben;
- Fig. 4a bis 4c: schematische Darstellungen beispielhafter gestapelter Dämmelemente;
- Fig. 5: eine schematische Darstellung eines beispielhaften Stapels mit zwei Dämmelementen; und
- Fig. 6a und 6b: schematische Darstellungen beispielhafter Dämmelemente.

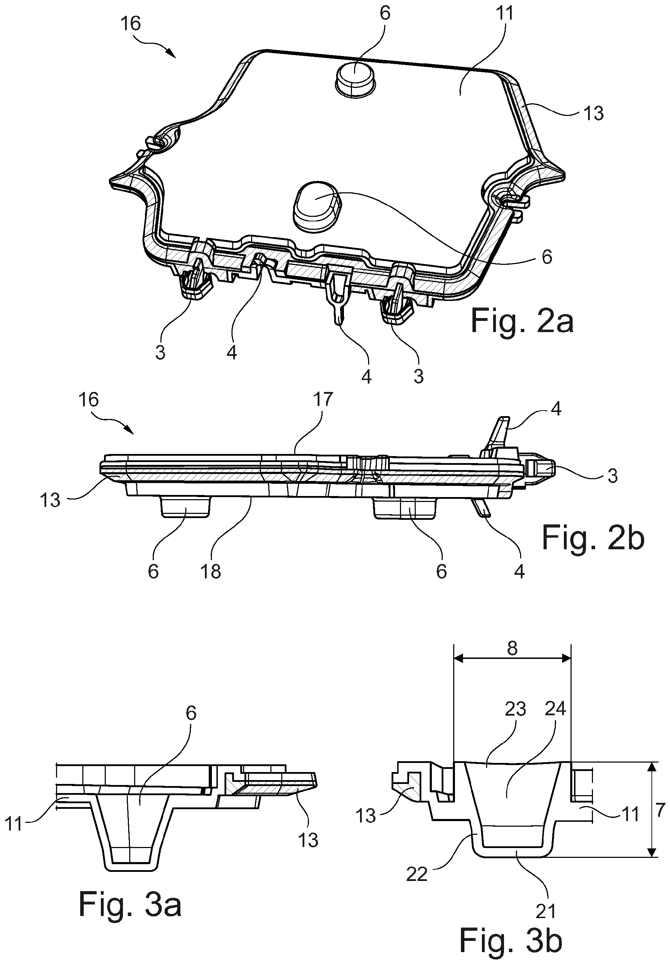

In Figur 2a und 2b ist ein beispielhaftes Dämmelement 16 schematisch dargestellt. Das Dämmelement 16 umfasst einen Träger 11 und ein darauf angeordnetes expandierbares Material 13. Der Träger 11 hat eine Oberseite 17 und eine Unterseite 18. Weiterhin hat der Träger 11 zwei Hauben 6, wobei die Hauben 6 in diesem Ausführungsbeispiel einen unterschiedlichen Grundriss aufweisen. Eine Haube 6 hat einen kreisförmigen Grundriss, und eine Haube 6 hat einen ovalen Grundriss.
Weiterhin umfasst das Dämmelement 16 Distanzelemente 4 sowie Fixierungselemente 3 zur Vorfixierung des Dämmelementes 16 in einem Strukturelement.

In den Figuren 3a und 3b ist jeweils beispielhaft eine Haube 6 im Querschnitt dargestellt. In Figur 3a überragt eine Seitenwand 22 der Haube 6 nur die Unterseite 18 des Trägers 11, und in Figur 3b überragt die Seitenwand 22 der Haube 6 sowohl die Unterseite 18 als auch die Oberseite 17 des Trägers 11.
Die Haube 6 hat eine Haubenbreite 8, gemessen an einer offenen Seite 23 der Haube 6 und senkrecht zur Stapelrichtung. Weiterhin hat die Haube 6 eine Haubenhöhe 7, gemessen in Stapelrichtung. Zudem hat die Haube 6 einen Haubenhohlraum 24 und ein Haubendach 21.

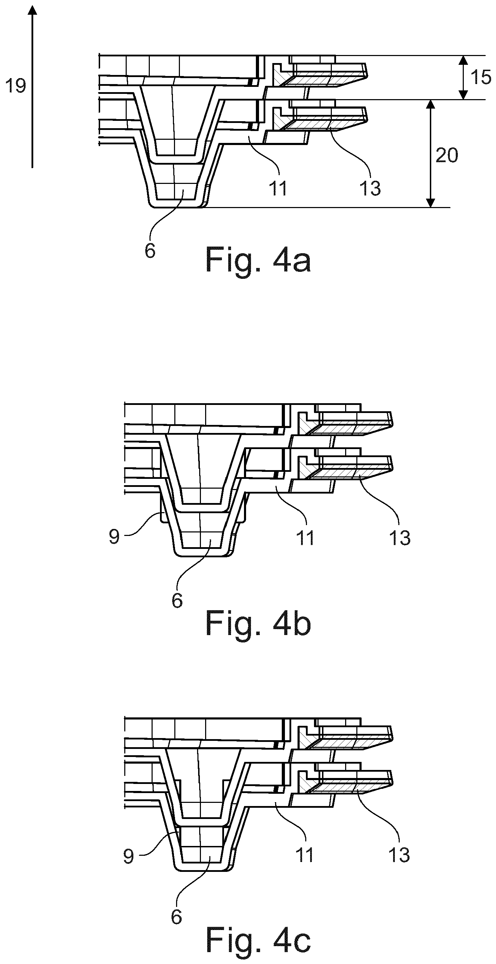

In den Figuren 4a bis 4c ist jeweils ein Ausschnitt aus einem Stapel bestehend aus zwei Dämmelementen 16 dargestellt.

In Figur 4a ist die Stapelrichtung 19 gekennzeichnet. Zudem ist eine Höhe 20 des Dämmelementes 16, sowie eine Stapelhöhe 15 eines Dämmelementes 16 dargestellt.

In Figur 4b haben die Dämmelemente 16 an einer Aussenseite der Haubenwand 22 Stopper 9. Dabei sind die Stopper 9 derart gebildet und angeordnet, dass bei einer Stapelung die Dämmelemente 16 jeweils auf diesen Stoppern 9 aufeinander aufliegen.

In Figur 4c ist eine alternative Ausführungsvariante dargestellt, bei welcher die Stopper 9 auf einer Innenseite der Haubenwand 22 angeordnet sind. Wiederum sind die Stopper 9 derart gebildet und angeordnet, dass bei einer Stapelung die Dämmelemente 16 jeweils auf diesen Stoppern 9 aufeinander aufliegen.

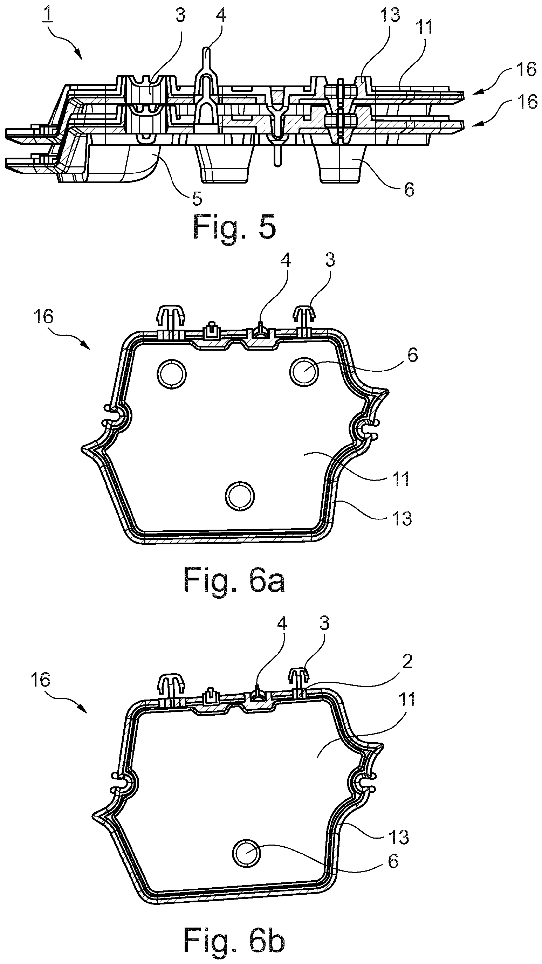

In Figur 5 ist ein Stapel 1 bestehend aus zwei Dämmelementen 16 dargestellt. In diesem Ausführungsbeispiel haben die Dämmelemente 16 jeweils eine Stufe 5. Im gestapelten Zustand greifen die benachbarten Dämmelemente 16 ineinander, wobei diese Überschiebung in den Bereichen der Stufe 5, der Hauben 6, der Distanzelemente 4, und der Fixierungselemente 3 vorliegt.
Weiterhin sind die Dämmelemente 16 derart ausgestaltet, dass bei einer Anordnung eines Dämmelementes 16 auf einer ebenen Fläche das Dämmelement 16 derart liegt, dass eine Hauptebene des Trägers 11 im Wesentlichen parallel zur ebenen Fläche liegt. Die Stufe 5 des Trägers 11 und die Hauben 6 sind derart ausgebildet, dass die Hauben 6 zusammen mit der Stufe 5 eine Auflagefläche bilden, welche parallel zu einer Ebene der Oberseite bzw. Unterseite des Trägers 11 ist.

In den Figuren 6a und 6b sind schliesslich zwei Unterschiedliche Ausführungsbeispiele in Bezug zu den Kontaktstellen der Dämmelemente 16 schematisch dargestellt.

Im Beispiel gemäss Figur 6a hat das Dämmelement 16 drei Hauben 6, welche als drei Kontaktstellen fungieren.
Im Beispiel gemäss Figur 6b hat das Dämmelement 16 eine Haube 6, welche als eine der drei Kontaktstellen fungiert. Zudem hat das Dämmelement 16 zwei weitere Kontaktstellen im Bereich der Fixierungselemente 3, in diesem Ausführungsbeispiel sind die Basen 2 der Fixierungselemente 3 als Kontaktstellen ausgebildet.

### Bezugszeichenliste

- 1: Stapel
- 2: Basis des Fixierungselementes
- 3: Fixierungselement
- 4: Distanzelement
- 5: Stufe
- 6: Haube
- 7: Haubenhöhe
- 8: Haubenbreite
- 9: Stopper
- 10: Karosserie
- 11: Träger
- 12: Strukturelement
- 13: expandierbares Material
- 14: Strukturelement
- 15: Stapelhöhe eines Dämmelementes
- 16: Dämmelement
- 17: Oberseite
- 18: Unterseite
- 19: Stapelrichtung
- 20: Höhe des Dämmelementes
- 21: Haubendach
- 22: Haubenwand
- 23: Offene Seite der Haube
- 24: Haubenhohlraum

## Patentansprüche

1. Dämmelement (16) zur Abdämmung eines Strukturelementes (12, 14) in einem Kraftfahrzeug, das Dämmelement (16) umfassend:
einen Träger (11); und
ein expandierbares Material (13), welches auf dem Träger (11) angeordnet ist;
**dadurch gekennzeichnet, dass** der Träger (11) zumindest eine Haube (6) hat und derart ausgebildet ist, dass bei einer Stapelung mehrerer identischer Dämmelemente (16) jeweils Hauben (6) benachbarter Dämmelemente (16) ineinandergreifen.

2. Dämmelement (16) nach Anspruch 1, wobei das Dämmelement (16) eine Oberseite (17) und eine Unterseite (18) hat, welche in einem Verwendungszustand im Wesentlichen in einer Ebene eines abzudämmenden Querschnittes des Strukturelementes (12, 14) ausgerichtet sind, und wobei eine offene Seite der Haube (6) und/oder ein Dach der Haube (6) im Wesentlichen parallel zur Oberseite (17) bzw. Unterseite (18) des Dämmelementes (16) ausgerichtet ist.

3. Dämmelement (16) nach einem der vorhergehenden Ansprüche, wobei eine Seitenwand der Haube (6) nur die Unterseite (18) überragt in einer Stapelrichtung (19), oder wobei eine Seitenwand der Haube (6) nur die Oberseite (17) überragt in einer Stapelrichtung (19), oder wobei eine Seitenwand der Haube (6) sowohl die Unterseite (18) als auch die Oberseite (17) überragt in einer Stapelrichtung (19).

4. Dämmelement (16) nach einem der vorhergehenden Ansprüche, wobei eine Stufe (5) des Trägers (11) und zumindest eine Haube (6) derart ausgebildet, dass die Haube (6) zusammen mit der Stufe (5) eine Auflagefläche bilden, welche parallel zu einer Ebene der Oberseite (17) bzw. Unterseite (18) des Trägers (11) ist.

5. Dämmelement (16) nach einem der vorhergehenden Ansprüche, wobei die Haube (6) eine im Wesentlichen kreisförmige, elliptische, oder ovale Grundfläche hat.

6. Dämmelement (16) nach einem der vorhergehenden Ansprüche, wobei der Träger (11) zumindest zwei Hauben (6) oder zumindest drei Hauben (6) hat.

7. Dämmelement (16) nach Anspruch 6, wobei zwei Hauben (6) einen unterschiedlichen Grundriss haben.

8. Dämmelement (16) nach einem der vorhergehenden Ansprüche, wobei eine Stapelhöhe (15) höchstens 50% einer Höhe (20) eines Dämmelementes (16) beträgt, und/oder wobei die Stapelhöhe (15) höchstens 80% einer Haubenhöhe (7) beträgt.

9. Dämmelement (16) nach einem der vorhergehenden Ansprüche, wobei die Haube (6) derart ausgebildet ist, dass bei einer Stapelung mehrerer identischer Dämmelemente (16) jeweils Hauben (6) benachbarter Dämmelemente (16) aufeinander aufliegen.

10. Dämmelement (16) nach Anspruch 9, wobei die Haube (6) einen Stopper hat, welcher einen Auflageort bei einer Stapelung definiert.

11. Dämmelement (16) nach einem der vorhergehenden Ansprüche, wobei das Dämmelement (16) zumindest drei Kontaktstellen hat, über welche benachbarte Dämmelemente (16) bei einer Stapelung aufeinander aufliegen, wobei die Haube (6) zumindest eine dieser Kontaktstellen bildet.

12. System (1) mit mehreren Dämmelementen (16) nach einem der Ansprüche 1 bis 11, wobei die Dämmelemente (16) aufeinandergestapelt sind.

13. System (1) nach Anspruch 12, wobei das System (1) zumindest 10 gestapelte Dämmelemente (16) umfasst, und/oder wobei ein unterstes Dämmelement (16) des Systems (1) auf einem Grundelement (2) aufliegt und/oder wobei eine Stapelhöhe (15) höchstens 80% einer Haubenhöhe (7) beträgt.

14. Verfahren zur Anbringung von Dämmelementen (16) an Strukturelementen (12, 14) in Kraftfahrzeugen, das Verfahren umfassend die Schritte:
Bereitstellen eines Systems (1) mit gestapelten Dämmelementen (16) nach einem der Ansprüche 12 oder 13;
Manipulieren der Dämmelemente (16) mit einem Applikationsroboter, wobei zumindest eine Haube (6) als Positionierungshilfe für den Applikationsroboter dient.

15. Verfahren nach Anspruch 14, wobei beim Manipulieren ein Greifer des Applikationsroboters die Dämmelemente an der Haube (6) greift, und/oder wobei die Dämmelemente (16) zumindest zwei Hauben (6) haben, und wobei beide Hauben (6) bei einer Manipulation als Positionierungshilfen dienen.
